# EUROPEAN PATENT SPECIFICATION

(11) **EP 0 395 324 B1**
(45) Date of publication and mention of the grant of the patent: **08.06.1994**
(21) Application number: 90304306.5
(22) Date of filing: 20.04.1990
(51) Int. Cl.: A45B 23/00, E04H 15/06

(54) **Tent frame and tent**
Zeltrahmen und Zelt
Armature de tente et tente

(30) Priority: 22.04.1989 GB 8909226
(43) Date of publication of application: 31.10.1990
(73) Proprietor: Brosman, Fryderyk, Saltburn-By-Sea, Cleveland TS12 1NS (GB); Hamnett, Mary Phyllis, Saltburn-By-Sea, Cleveland TS12 1NS (GB)
(72) Inventor: Brosman, Fryderyk, Saltburn-By-Sea, Cleveland TS12 1NS (GB); Hamnett, Mary Phyllis, Saltburn-By-Sea, Cleveland TS12 1NS (GB)
(74) Representative: Jones, William

(56) References cited:
- EP-A- 0 059 604
- CA-A- 994 512
- US-A- 3 010 462
- US-A- 3 254 657
- US-A- 3 894 765

## Description

### Background to the Invention

The invention relates to tent frames and tents, and one of its objects is to provide a tent which can be carried on the roof of a car or other vehicle and which is easier and more convenient to erect than conventional tents.

EP-A-0059604 discloses a collapsible tent frame adapted for carriage on the roof of a vehicle. However, there is no disclosure, explicit or otherwise, in this document as to how erection of the frame can be facilitated by the provision of a lifting or leverage mechanism. Hence the frame disclosed in this prior art is both difficult and time consuming to erect.

### Summary of the Invention

A tent frame comprising a frame-carrying base; means for mounting the base, in use, on a mobile platform such as the roof of a vehicle; an elongate frame member constituting a raisable ridge frame member of the ultimately-assembled tent frame; and respective arms and legs each mounted or adapted for mounting upon the ridge frame member in such a way that the arms can extend from the ridge frame member outwardly, and the legs can extend from the arms generally downwardly, to form the side frame members of the ultimately-assembled tent frame; wherein the ridge frame member, the base, and some at least of the frame's arms and legs are packaged in such a way that when the package is mounted on the mobile plafform and conveyed to an intended site of use, (a) sufficient of the frame can be assembled for the frame to be self-supported on the surface on which the vehicle rests; (b) the thus-far-assembled frame is then readily separable from the platform; and (c) the frame side members do not then prevent the vehicle from moving out from under the frame and being driven away; characterized in that the base is provided with means comprising a parallelogram linkage for raising and disengaging the frame member from the base.

Other features of the invention which are believed to be new and involve an inventive step, and which will be illustrated by way of example only in the following description with reference to the accompanying drawings, are defined in the Claims.

### Brief Description of the Drawings

### In the accompanying drawings:

Figure 1 is an elevation of a car to which a first form of tent frame has been fitted, the frame being shown in the collapsed condition in which it is transported;
Figure 2 is a view from the rear of the car and tent frame of Figure 1;
Figures 3 and 4 are views corresponding to Figures 1 and 2 but with the tent frame in a partly-erected condition;
Figures 5 and 6 are further views corresponding to Figures 1 and 2 but with the tent frame fully erected;
Figure 7 is a perspective view, to a larger scale, of the car and tent frame in the condition illustrated in Figures 5 and 6;
Figure 8 shows a second form of tent frame, embodying the invention, in "exploded" perspective;
Figures 9, 10 and 11 drawn to an enlarged scale, show the special hinge-mount joining the side frame members of this second embodiment to the ridge member; and
Figures 12, 13 and 14 are views corresponding respectively to Figures 9, 10 and 11 in viewing angle but showing a special form of clamp acting on the telescoping parts of certain of the frame members of this second embodiment.

### Description of the Preferred Embodiments

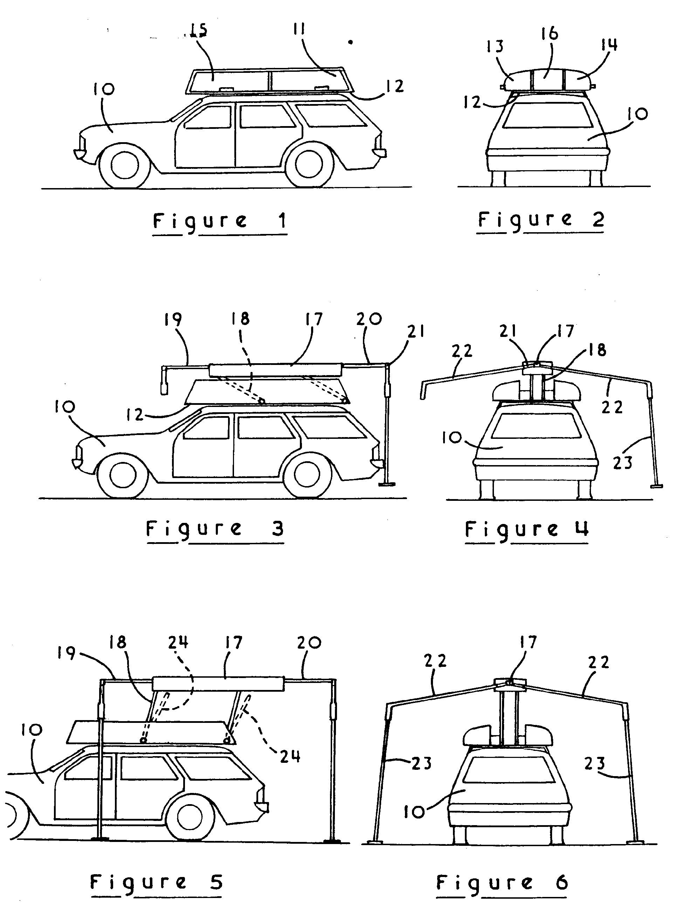

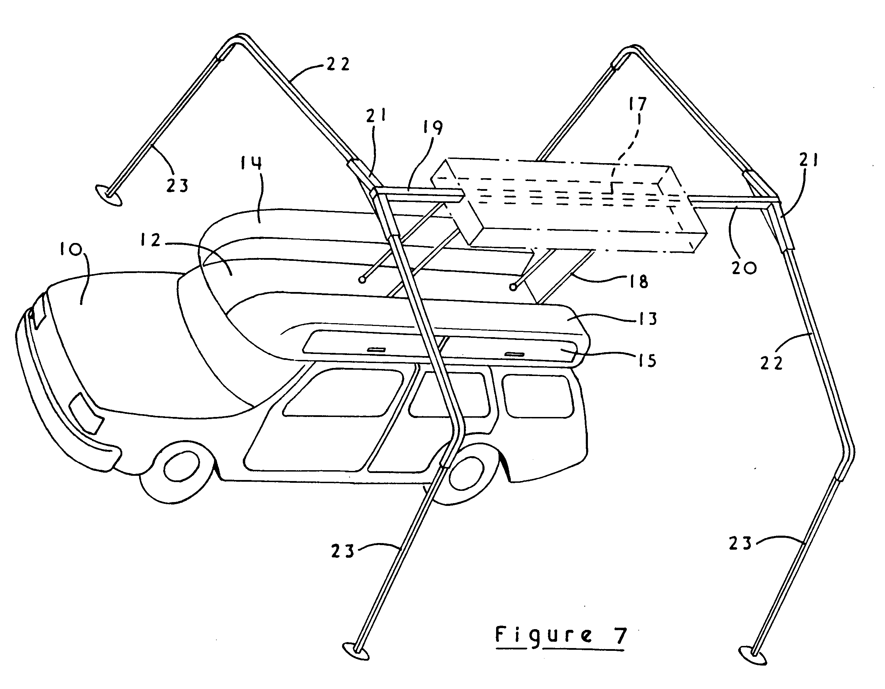

The car 10 illustrated in Figures 1 to 7 carries a package 11 upon its roof, to which the package is secured by conventional clamping attachments (not illustrated) resembling those of a roof rack. The package includes a base 12, which carries side panniers 13, 14, the contents of which are accessible via doors 15. Between the panniers are the frame parts and tent cover from which a tent will be assembled, protected during transit by means of a weather-proof soft cover 16.

An elongate frame member 17 is linked to the base 12 by lifting arms 18, pivoted at their ends to the frame member and the base respectively to form a double-sided parallelogram linkage by which the member 17 may be lifted into positions above the base by pivoting of the arms 18.

When the car arrives at the camping site, the arms 18 are pivoted sufficiently only for the frame member 17 to be lifted above the level of the panniers 13, 14 as illustrated in Figure 3. Lifting may be assisted by springs or jacks, preferably by springs of the "over-centre" kind. The member 17 has telescopic extensions 19, 20 by means of which it may be extended forwardly and rearwardly respectively and at the outer ends of these extensions are provided short cross-pieces 21, each having sockets at both ends. Arms 22 are fitted into these sockets and extend laterally outwardly for example, at an angle of the order of from 5 to 15 degrees below the horizontal and somewhat downwardly (ditto, to the vertical) as illustrated. Into further sockets in the free ends of the arms 22, support legs 23 are fitted. The legs 23 are telescopically extensible but at this stage remain retracted.

The member 17 is now raised to a higher level (Figure 5) by further pivoting of the lifting arms 18 (clockwise as illustrated). From this position, the support legs 23 are now extended downwardly until they engage the ground as shown in Figures 5 and 6. Further pivoting of the arms 18 to the position indicated by the reference numeral 24 in Figure 5 disengages the arms 18 from the member 17 and allows the car 10 to be driven out from under the now fully-erected tent frame. The arms can be swung back down into the space between the panniers 13 and 14 until they are eventually required when the tent is to be stowed again.

A tent cover (not shown) of a size appropriate to the erected frame is carried upon the member 17 and may now be unfolded into place over the frame, before being secured in place both to the frame and also conventionally to the ground.

The tent cover, although not illustrated, is preferably "tunnelled" around the ridge member 17 and its extensions 19 and 20. That is to say, part of the cover material is formed into an elongate tube which embraces these members 17,19 and 20. In a preferred construction, the tunnel is split so that it can be folded around the ridge member; and the then-overlapped folded-together opposite edges of the tunnel are secured to one another releasably by VELCRO touch-and-close fasteners or similarly readily releasable but sufficiently normally secure fastening means (the word VELCRO is a trade mark).

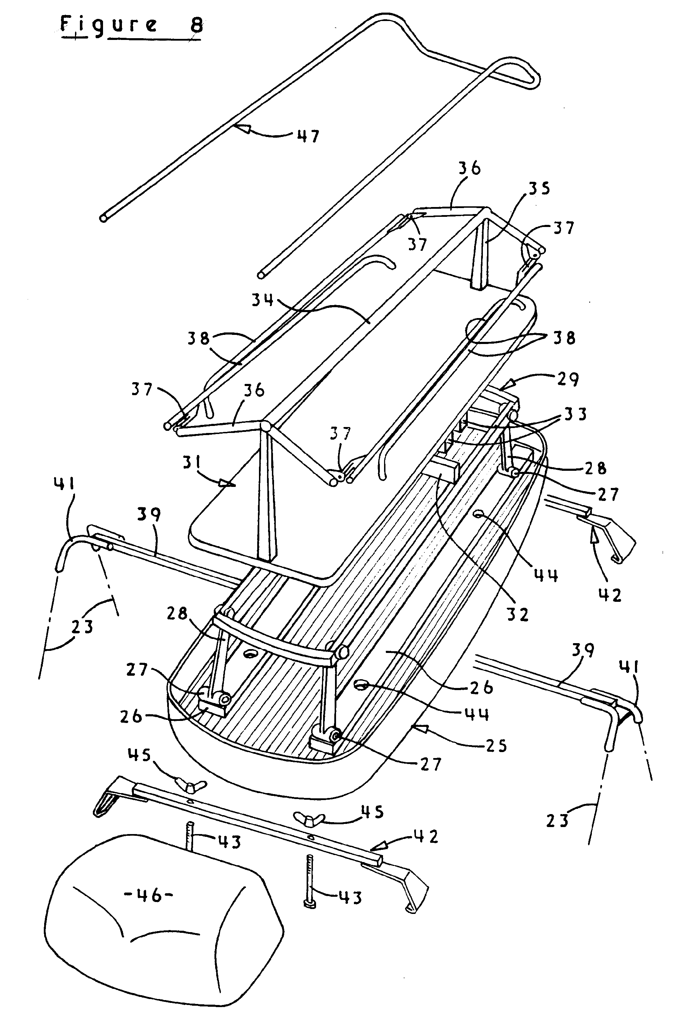

Referring now to Figure 8, a more developed form of the invention is shown which works in essentially the same basic way as the embodiment of Figures 1 to 7 but which has a number of further advantageous features. The base 25 of this embodiment is a moulded elongate plastics tray with shallow side walls and a ribbed bottom surface. It houses a rigid rectangular steel framework whose opposite longitudinal side members 26 run in the valleys between adjacent ribs of the moulded tray, hence helping to brace the tray, and also act as supports for the housings of pivots 27 from which the respective arms 28 of a parallelogram linkage rise.

The length of the tray 25 is such that, with the linkage arms folded flat into it, the linkage is accommodated below the walls of the tray. Also accommodated within the tray, in this condition of the linkage, is a rigid rectangular steel frame 29 to which the other ends of the linkage arms 28 are pivotally attached.

The pivots 27 each incorporate spring means, of a kind which is known in itself from other fields, and which act torsionally to give an "over-centre" action to the linkage. That is to say, when the linkage is raised from its folded-flat in-tray condition just outlined, the spring means will assist the unfolding of the linkage towards a position in which the arms 28 rise approximately vertically from the side members 26; and the spring means will similarly initially assist the first part of the subsequent folding-flat movement of the linkage from that position.

These spring means are specifically illustrated, nor need they be described. The intended skilled addressee of this specification can supply them from the known art. But it is believed to be both new and to involve an inventive step to think of using them in a mobile tent frame.

The framework 29, like the framework 26, is an open one. When the parallelogram linkage is folded flat into the tray, the two frameworks may overly one another or they may - in order to save vertical space - be so constructed that one of them lies within the other. The details are unimportant to the invention. But in either event, a shelf 31 sits on top of the framework 29 and is located - but not secured - in position on the framework 29 by virtue of the inter-fit between a bar 32 (which spans the framework 29 approximately midway along its length) and two spaced-apart bars 33 which span the underside of the shelf 31, and are parallel one with another, again approximately midway along the length of the shelf.

The bar 32 and the bars 33 are each square-section bars. The spacing between bars 33 accommodates bar 32 relatively easily. Shelf 31 is so sized that it overlaps framework 29 peripherally.

An elongate ridge frame member 34 is supported on opposite-end struts 35 above shelf 31. Respective end frames 36 extend from each opposite end of ridge member 34 as shown. A hinge-mount 37 is fixed to each opposite extremity of each end-frame 36 so that there are four such hinge-mounts spaced one above each corner of shelf 31.

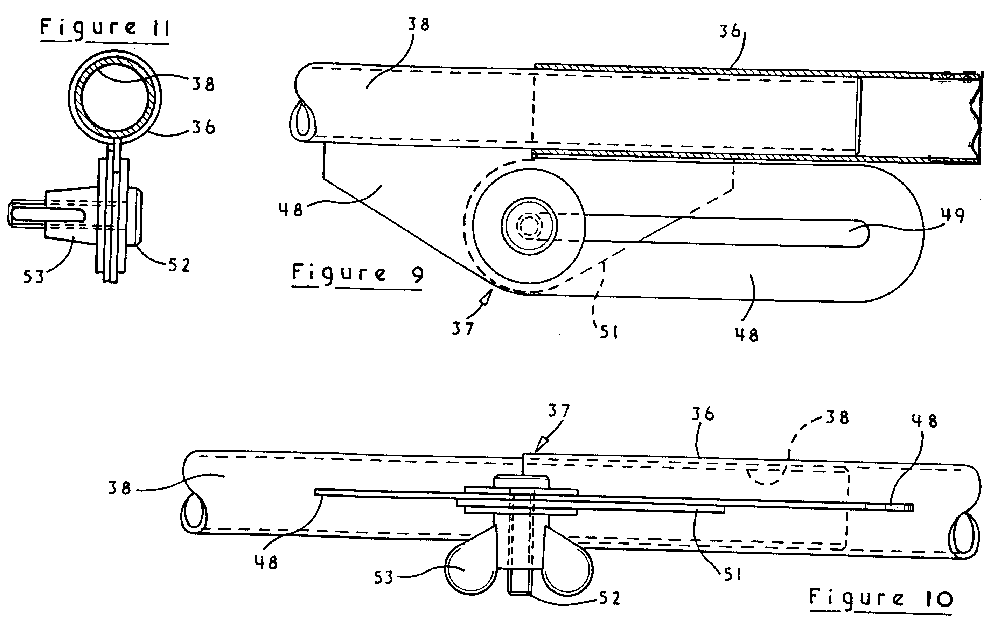

These hinge-mounts each carry a respective arm 38. The construction of the mounts, which are shown in detail in Figures 9, 10 and 11, enable arms 38 to lie approximately horizontally and parallel to ridge member 34 as illustrated in Figure 8; whilst being able to be swung out, first, to a position in which they are in line with their corresponding end-frame 36 and, then, telescoped into or over the tubular end-frame members to define an arm extending approximately at right angles from ridge member 34.

Before arms 38 can be moved into this just-described projecting position, however, linkage 28 has to be operated and before this operation is described, the description of the rest of the package illustrated in Figure 8 will be completed.

Each of the bars 33 which span the underside of shelf 31 is an open-ended square-section tube. A similarly-sectioned pair of arms 39 is carried, normally, in tray 25. In use, each of these arms 35 plugs into a respective opposite end of one of the bars 33 - it does not matter which bar as long as, for preference, the two arms 39 are each plugged into the same bar - to project from the elongate axis of shelf 31 ( and hence from ridge member 34) at right angles and in approximately the same generally downward manner as the then-projecting arms 38.

Fixed to the thus-projecting ends of arms 39 are respective splay-fittings 41. Elongate legs, identical in function to the legs 23 of the previous embodiment illustrated in Figures 1 to 7, can fit into each of these splay-fittings 41. Similar legs can fit into the by-then-projecting and downward-turned extremities of arms 38 to form, with the arms of 38 and 39, the side members of the tent frame.

Conventional roof rack bars 42 span the underside of tray 25 and are appropriately spaced one from another along the length of the tray. Bolts 33 pass through the cross-bars of the units 42 and through holes 44 in the in-tray side frame members 26 to be secured to the members 26 by readily releasable wing nuts 45. This arrangement not only enables the roof rack units 42 to be separated from the rest of the tent frame package when required; if the roof rack cross-bars are wide enough, and the tray 25 slim enough, the rack could be used as a conventional roof rack to carry luggage as well as mounting the tray 25 and its associated components.

A semi-rigid nose cone 46 of moulded plastics material snap-fits releasably into the suitably-lipped front-facing end of the tray 25. A resilient spring steel rail section 47 clips one end into the top of the cone 46 and at its other end into the rearward-facing end of tray 25. The illustrated opposite-side rails of this component 47 allow a flexible cover (not shown) to be fitted into place and to shroud the whole unit in a weatherproof manner.

A tent cover (not shown) is fitted around ridge member 34 in the manner previously described with reference to the first embodiment of Figures 1 to 7. The remainder of the cover can be furled to lie within the tray and the components that it houses when the thus-defined package is being transported.

The way the package of Figure 8 is used will by now be apparent. When nose cone 46, rail 47, and the weatherproof cover surrounding them have been removed, linkage 28 is swung to raise shelf 31 and hence ridge member 34 to a position in which it is held above tray 25. Arms 38 are then pivoted out and locked into their projecting positions. Arms 39 are plugged into place. Legs 23 - eight of them in all - are plugged into position. Linkage 28 can be swung flat again, bars 33 having been raised slightly above bar 32 by the assembly into place of legs 23. And the vehicle to which tray 25 is secured can then be driven away to leave the tent cover free to unfurl and be secured to the frame side members and conventionally to the ground.

Instead of swinging arms 38 out in the operation just described, arms 39 alone could be plugged into place and legs 23 inserted into splay-fittings 41. This gives the vehicle maximum room for manoeuvre as it is driven away and, subsequently, as it is driven back into position under shelf 31.

Shelf 31 functions, literally, as a below-eaves storage shelf when the tent is actually in use. Equally if not more importantly, it enables the car to have to locate only approximately under the ridge when it is driven into stow the tent frame after use. Although two bars 33 have been illustrated, in this latter context only one is strictly necessary and this would make it even easier to locate the car roof underneath shelf 31 when the time came to re-package the tent frame.

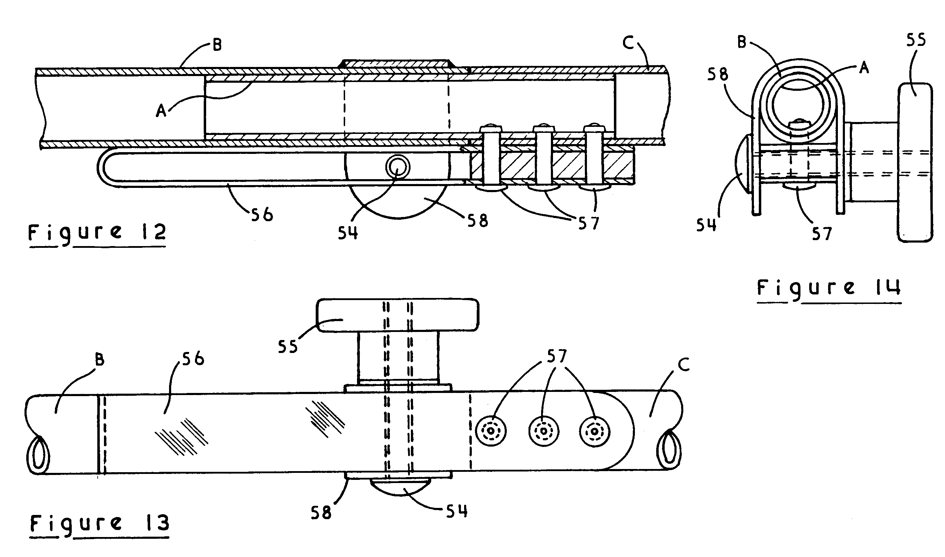

Figures 9, 10 and 11 (the hinge-mounts 37) and Figures 12, 13 and 14 (the telescope-locking means) are self-explanatory in view of the foregoing description and the accompanying drawings. But each of them is believed to be both new and to involve an inventive step in its own right as well as when applied to a tent frame or tent embodying the present invention. They will therefore be described in rather more detail.

Each hinge-mount 37 comprises a flat elongate plate 48 fixed to one of the elongate arms 38. A slot 49 is formed in this plate. When the plate is fixed to the arm, the plate projects radially from the axis of the arm 38, and the slot 49 runs parallel with the arm axis.

Another similarly flat plate 51 is fixed to the open end region of the outwardly and downwardly projecting end-frame tube 36 (of which there are two such tubes in each end-frame assembly). This plate 51 is drilled to take a headed bolt 52. The bolt 52 is an easy sliding fit in the slot 49 of plate 48. A wing nut 53 screws onto the bolt 52 and Figures 9, 10 and 11 show how these various components are assembled to form the hingemount 37.

As previously outlined, the mounts 37 enable arms 38 to occupy two distinct positions, a first position as illustrated in Figure 8, and a second position as illustrated in Figures 9,10 and 11. Slackening the wing nut 53 allows plate 48 to move, carrying with it arm 38, and enables arm 38 to be swung and slid from one of these positions into the other. Subsequent tightening of wing nut 53 holds the arm 38 in the selected position.

The telescope-locking means of Figures 12, 13 and 14 is similarly fastenable and unfastenable, this time via the co-operating action of a headed bolt 54 and a hand wheel clamp 55 which screw-threads onto the bolt. The two tubular arms which are arranged to be telescoped in this way are not referenced, since this telescoping feature could be applied to more than one of the arms of the illustrated embodiment. But the inner arm A of the telescoped arrangement has a U-shaped spring steel plate 56 secured to it by rivets 57 so as to run parallel with the axis of the arm A and to form a slideway for the bolt shank 54. A U-clamp plate 58 embraces and is fixed to the outer surface of the outer arm B of the telescope, and the hand wheel clamp 55 tightens the U-arm 58 via the bolt 54, or slackens it, to allow arms A and B to telescope relative to one another to an extent defined by the inside length of plate 56 (at one extreme) and the abutting contact between the end of tubular arm B and a similarly-tubular swaging sleeve C which is fixed to and embraces arm A.

Modifications may be made to the illustrated embodiment. The use of jacks, for example screw jacks, instead of springs has already been mentioned. The nose cone 46 could be permanently attached to the tray 25, with rails 47 swinging upwardly instead of coming away from the nose cone. Alternatively, a hard-cover version could be developed, and in either of these latter two cases, a relatively restricted arc of swing of the cover/rail (say no more than about forty-five degrees from the horizontal) might be enough.

## Claims

1. A tent frame comprising a frame-carrying base (12;25); means for mounting the base, in use, on a mobile platform such as the roof of a vehicle (10); an elongate frame member (17;34) constituting a raisable ridge frame member of the ultimately-assembled tent frame; and respective arms frame (22;39) and legs (23) each mounted or adapted for mounting upon the ridge frame member in such a way that the arms (22;39) can extend from the ridge frame member (17;34) outwardly, and the legs (23) can extend from the arms (22;39) generally downwardly, to form the frame side members of the ultimately-assembled tent frame; wherein the ridge frame member (17;34), the base (12;25) and some at least of the frame's arms (22;39) and legs (23), are packaged in such a way that when the package (11) is mounted on the mobile platform and conveyed to an intended site of use, a) sufficient of the frame can be assembled for the frame to be self-supported on the surface on which the vehicle rests; b) the thus-far-assembled frame is then readily separable from the platform; and c) the frame side members do not then prevent the vehicle (10) from moving out from under the frame and being driven away; characterized in that the base (12;25) is provided with means comprising a parallelogram linkage (18;28) for raising and disengaging the frame member (17;34) from the base (12;25).

2. A tent frame according to Claim 1 characterized in that the linkage (28) includes a spring-urging means having "over-centre" action, i.e. beyond a certain point in the linkage movement, it assists the lowering as well as the raising of the ridge member (17).

3. A tent frame according to Claim 2 and characterised by the feature that some at least of the legs are hinge-mounted on the ridge member to lie generally alongside the ridge member in the package and can swing about their mountings to project from the ridge member when the frame is assembled for use.

4. A tent frame according to Claim 2 or Claim 3 and characterised by the feature that arms projecting, in use, one from each opposite side of the ridge member, each extend into and end in legs which are splayed in such a way that these legs alone can support the ridge member whilst the vehicle is driven away.

5. A tent frame according to Claim 1 or Claim 2 in which there is provided a shelf (31) fixed below, and spaced from, the ridge member (17) so that when the frame is separated from the platform in use, and the platform moved away, the shelf (31) is left suspended below the ridge member.

6. A tent frame according to Claim 1 in which there is provided a means for mounting the base (12) on the platform in use, comprising vehicle roof rack clamps which are relatively readily separable from the base (12) to allow them to function as clamps carrying a conventional vehicle roof rack instead of, or as well as, the tent frame package (11).

7. A tent frame according to Claim 1 in which there is further provided a tent cover adapted to be supported on the frame.

8. A tent frame according to Claim 1 in which a tent cover adapted to fit about the ultimately-assembled tent frame is attached to the elongate frame member (17) and so can be folded to rest on said base (12) when not in use.

## Patentansprüche

1. Zeltrahmen, umfassend eine Rahmenträgerbasis (12; 25); Mittel zum Befestigen der Basis bei Gebrauch auf einer mobilen Plattform, beispielsweise auf dem Dach eines Fahrzeugs (10); ein verlängertes Rahmenglied (17; 34), welches ein hochhebbares Firstrahmenglied des endgültig zusammengebauten Zeltrahmens bildet; und entsprechende Arme (22; 39) und Beine (23), welche jeweils derart befestigt oder zum Befestigen auf dem Firstrahmenglied adaptiert sind, daß sich die Arme (22; 39) vom Firstrahmenglied (17; 34) nach außen erstrecken können und die Beine (23) sich im allgemeinen von den Armen (22; 39) nach unten erstrecken können, um die Rahmenseitenglieder des endgültig zusammengebauten Zeltrahmens zu bilden; wobei das Firstrahmenglied (17; 34), die Basis (12; 25) und zumindest einige der Arme (22; 39) und Beine (23) des Rahmens derart verpackt sind, daß, wenn das Paket (11) auf der mobilen Plattform befestigt und zu einem beabsichtigten Verwendungsort transportiert wird, a) genügend vom Rahmen zusammengebaut werden kann, so daß der Rahmen frei auf der Oberfläche steht, auf welcher das Fahrzeug steht; b) der soweit zusammengebaute Rahmen sodann einfach von der Plattform getrennt werden kann; und c) die Rahmenseitenglieder das Fahrzeug (10) dann nicht daran hindern, sich unter dem Rahmen herauszubewegen und weggefahren zu werden; dadurch gekennzeichnet, daß die Basis (12; 25) mit Mitteln ausgestattet ist, die eine Parallelogrammverbindung (18; 28) zum Hochheben und Lösen des Rahmengliedes (17; 34) von der Basis (12; 25) umfassen.

2. Zeltrahmen nach Anspruch 1, dadurch gekennzeichnet, daß die Verbindung (18; 28) ein Federdruckmittel umfaßt, welches "überzentrale" Wirkung aufweist, das heißt, über einen bestimmten Punkt in der Verbindungsbewegung hinaus, und es das Absenken sowie das Hochheben des Rahmengliedes (17; 34) unterstützt.

3. Zeltrahmen nach Anspruch 2 und gekennzeichnet durch das Merkmal, daß zumindest einige der Beine durch Scharniere am Firstglied befestigt sind, um im Paket im allgemeinen längsseits des Firstglieds zu liegen, und sich um ihre Befestigungen schwenken können, um vom Firstglied vorzuragen, wenn der Rahmen für den Gebrauch zusammengebaut wird.

4. Zeltrahmen nach Anspruch 2 oder Anspruch 3 und gekennzeichnet durch das Merkmal, daß bei Gebrauch Arme vorragen, jeweils einer von jeder der entgegengesetzten Seiten des Firstgliedes, wobei sich jeder in Beine erstreckt und darin endet, welche derart gespreizt sind, daß diese Beine das Firstglied selbständig tragen können, während das Fahrzeug weggefahren wird.

5. Zeltrahmen nach Anspruch 1 oder Anspruch 2, wobei ein Regal (31) vorgesehen ist, welches unter dem Firstglied (17; 34) und davon beabstandet befestigt ist, so daß das Regal (31) unter dem Firstglied aufgehängt bleibt, wenn der Rahmen bei Gebrauch von der Plattform getrennt und die Plattform wegbewegt wird.

6. Zeltrahmen nach Anspruch 1, wobei bei Gebrauch ein Mittel zum Befestigen der Basis (12; 25) auf der Plattform vorgesehen wird, umfassend Fahrzeugdachgepäckhalterklammern, welche relativ einfach von der Basis (12; 25) gelöst werden können, um zu ermöglichen, daß sie als Klammern dienen, welche einen herkömmlichen Fahrzeugdachgepäckhalter anstelle des Zeltrahmenpakets (11) oder auch das Zeltrahmenpaket (11) tragen.

7. Zeltrahmen nach Anspruch 1, wobei ferner eine Zelthülle vorgesehen ist, die adaptiert ist, um auf dem Rahmen getragen zu werden.

8. Zeitrahmen nach Anspruch 1, wobei eine Zelthülle, die adaptiert ist, um über den endgültig zusammengebauten Zeltrahmen zu passen, am verlängerten Rahmenglied (17; 34) befestigt ist und derart gefaltet werden kann, daß sie, wenn sie nicht verwendet wird, auf der Basis (12; 25) aufliegt.

## Revendications

1. Cadre de tente comprenant une base de support du cadre (12.15); des moyens de montage de la base, lors de son utilisation, sur une plate-forme mobile telle que le toit d'un véhicule (10); un membre de cadre allongé (17;34) qui constitue un membre de cadre d'arête soulevable du cadre de tente finalement assemblé; et des bras (22;39) et pieds (23) respectifs, chacun monté ou adapté pour le montage sur le membre d'arête du cadre, de façon que les bras (22;39) peuvent s'étendre depuis le membre d'arête du cadre (17;34) vers l'extérieur, et que les pieds (23) puissent s'étendre depuis les bras (22,39) généralement vers le bas, afin de former les membres latéraux de cadre du cadre de tente finalement assemblé; dans lequel le membre d'arête du cadre (17;34), la base (12;25) et au moins certains des bras (22;39) et pieds (23) du cadre sont conditionnés de sorte que lorsque le conditionnement (11) est monté sur la plate-forme mobile et déplacé vers un site d'usage prévu, a) une partie suffisante du cadre peut être assemblée pour que le cadre soit auto-porteur sur la surface contre laquelle le véhicule repose; b) le cadre ainsi pré-assemblé soit ensuite aisément séparable de la plate-forme; et c) les membres latéraux du cadre n'empêchent pas alors le véhicule (10) de se déplacer depuis le dessous du cadre et d'être conduit, caractérisé en ce que la base (12;25) est pourvue de moyens comprenant une liaison en parallélogramme (18;28) aptes à soulever et désengager le membre de cadre (17;34) de la base (12;25).

2. Cadre de tente selon la revendication 1, caractérisé en ce que la liaison (18;28) comprend des moyens de sollicitation élastique ayant une action "en dépassement du centre", c'est-à-dire qu'au-delà d'un certain point durant le mouvement de la liaison, ils assistent l'abaissement aussi bien que le soulèvement du membre d'arête (17;34).

3. Cadre de tente selon la revendication 2, caractérisé par le fait qu'au moins certains des pieds sont montés en charnière sur l'élément d'arête pour reposer de manière générale latéralement le long du membre d'arête au sein du conditionnement et peuvent basculer autour de leurs montures pour dépasser du membre d'arête quand le cadre est assemblé en vue de son utilisation.

4. Cadre de tente selon la revendication 1 ou 3, caractérisé par le fait que des bras faisant saillie, lors de leur utilisation, l'un depuis chaque côté opposé du membre d'arête, s'étendent chacun à l'intérieur et finissant en pieds qui sont évasés de façon que ces pieds seuls peuvent supporter le membre d'arête, tandis-que le véhicule est conduit ailleurs.

5. Cadre de tente selon la revendication 1 ou 2, dans le lequel est prévu une étagère (31) fixée en-dessous et à distance du membre d'arête (17;34), de sorte que si le cadre est séparé de la plate-forme durant son utilisation, et que la plate-forme est retirée, l'étagère (31) est suspendue en-dessous du membre d'arête.

6. Cadre de tente selon la revendication 1, dans lequel sont prévus des moyens pour le montage de la base (12;25) sur la plate-forme durant son utilisation, comprenant des pinces de galerie de toit de véhicule qui sont assez aisément séparables de la base (12;25) pour leur permettre de fonctionner comme des pinces supportant une galerie conventionnelle de toit de véhicule au lieu du, ou aussi bien que le, conditionnement de cadre de tente (11).

7. Cadre de tente selon la revendication 1, dans lequel est prévu en outre un recouvrement de tente apte à être supporté par le cadre.

8. Cadre de tente selon la revendication 1, dans lequel un recouvrement de tente apte à être ajusté autour du cadre de tente finalement assemblé, est attachée au membre allongé du cadre (17;34) et peut ainsi être plié pour reposer sur ladite base (12;25) lorsqu'elle n'est pas utilisée.
